# EUROPÄISCHE PATENTSCHRIFT

(11) **EP 2 957 809 B1**
(45) Veröffentlichungstag und Bekanntmachung des Hinweises auf die Patenterteilung: **12.06.2019**
(21) Anmeldenummer: 15162702.3
(22) Anmeldetag: 08.04.2015
(51) Int. Cl.: F16L 37/50, F16L 37/53, F16L 37/098

(54) **KUPPLUNGSELEMENT ZUR FLEXIBLEN VERBINDUNG ZWEIER ELEMENTE ZUR FÜHRUNG VON MEDIEN**
COUPLING ELEMENT FOR FLEXIBLE CONNECTION OF TWO ELEMENTS FOR CONDUCTING MEDIA
ÉLÉMENT D'ACCOUPLEMENT DESTINÉ AU RACCORD FLEXIBLE DE DEUX ÉLÉMENTS DESTINÉS À LA CONDUCTION DE MÉDIA

(30) Priorität: 20.06.2014 DE 102014211844
(43) Veröffentlichungstag der Anmeldung: 23.12.2015
(73) Patentinhaber: ContiTech MGW GmbH, 34346 Hannoversch-Münden (DE)
(72) Erfinder: Fassl, Holger, 34379 Calden (DE); Seegers, Carsten, 34346 Hannoversch Münden (DE); Bornemann, Axel, 37191 Katlenburg-Lindau (DE); Flach, Axel, 34537 Bad Wildungen (DE); Terpe, Julian, 34346 Hannoversch-Münden (DE); Makarenko, Ilja, 34246 Vellmar (DE)
(74) Vertreter: Finger, Karsten

(56) Entgegenhaltungen:
- EP-A2- 0 406 587
- DE-A1- 3 825 866
- DE-A1- 19 607 011
- FR-A3- 2 910 110
- US-A- 4 932 686
- US-A- 5 651 732

## Beschreibung

Die Erfindung betrifft ein Kupplungselement zur flexiblen Verbindung zweier Elemente zur Führung von Medien gemäß dem Oberbegriff des Anspruchs 1.

Gattungsbildende Kupplungselemente sind aus der EP0406587A2 und der DE3825866A1 bekannt.

Zum Transport von Medien wie z.B. Fluiden, Gasen oder auch pastösen Medien werden z.B. Leitungen, Schläuche, Rohre etc. verwendet. Diese können untereinander oder z.B. an Aggregate angeschlossen werden, um den Medienfluss zu realisieren. Beispielsweise werden im Automobilbereich Fluide wie z.B. Kraftstoffe, Öle, Zusatzstoffe (AdBlue®) und Kühlmittel oder Gase wie z.B. Ladeluft derartig geleitet.

Zur Herstellung dieser Verbindung bzw. dieses Anschlusses werden Kupplungen verwendet. Diese dienen der sicheren, dauerhaften und mediendichten Verbindung der Elemente.

Diese Leitungen sind fertigungsbedingt in ihrem Verlauf mit mehr oder weniger großen Toleranzen behaftet, die je nach Anwendungsfall wie z.B. dem Einbauraum im Fahrzeug zulässig sein können. Somit können Leitungen verwendet werden, die innerhalb der Kleinst- und Größtmaße der Toleranzen des Anwendungsfalls liegen.

Das Maß der Toleranzen bestimmt sich dabei je nach Anwendungsfall danach, dass der Verlauf der Leitung durch die zulässigen Toleranzen nicht beeinträchtigt wird, z.B. durch die Kollision mit Nachbarbauteilen. Auch müssen trotz der zulässigen Toleranzen die Befestigungspunkte (Stützstellen) für die Leitung eingehalten werden, damit sie mit den Gegenpositionen (Anschraubpunkten) z.B. am Motor übereinstimmen.

Eine Aufgabe der vorliegenden Erfindung ist es, ein Kupplungselement zur flexiblen Verbindung zweier Elemente zur Führung von Medien für die eingangs beschriebenen Anwendungen bereit zu stellen, das Fertigungstoleranzen der Elemente ausgleichen kann und somit die zulässigen Kleinst- und Größtmaße der Toleranzen der Elemente erhöht.

Die Aufgabe wird erfindungsgemäß durch ein Kupplungselement zur flexiblen Verbindung zweier Elemente zur Führung von Medien mit den Merkmalen gemäß Anspruch 1 gelöst. Vorteilhafte Weiterbildungen sind in den Unteransprüchen beschrieben.

Somit betrifft die vorliegende Erfindung ein Kupplungselement zur flexiblen Verbindung zweier Elemente zur Führung von Medien, insbesondere eines Schlauches mit einem anderen Schlauch oder einem Aggregat, mit einem ersten Bauteil zur Verbindung mit dem ersten Element und einem zweiten Bauteil zur Verbindung mit dem zweiten Element, wobei das erste Bauteil und das zweite Bauteil eine gemeinsame Längsrichtung besitzen. Diese Elemente können beides Schläuche, Leitungen, Rohre oder dergleichen sein oder eines der Elemente kann ein Aggregat sein, welches mit einem Schlauch etc. verbunden wird. Das Medium kann ein Fluid, Gas oder auch ein pastöses Medium sein. Vorzugsweise handelt es sich um eine Anwendung im Automobilbereich mit Schläuchen bzw. Leitungen insbesondere im Motorraum des Fahrzeugs, welche untereinander oder mit Aggregaten verbunden werden, um Kraftstoff, Öl, Zusatzstoff, Kühlmittel oder auch Ladeluft zu leiten.

Das Kupplungselement ist zweiteilig ausgebildet und besteht aus zwei Bauteilen, die jeweils mit einem der Verbindungspartner, d.h. jeweils einem Schlauch oder einem Schlauch und einem Aggregat verbunden sind. Die Verbindung kann z.B. stoffschlüssig mit Vulkanisation oder Klebemitteln aber auch zusätzlich oder alternativ kraft- und bzw. formschlüssig sein. Die Bauteile können aus den gleichen oder unterschiedlichen Materialien wie z.B. Metall oder Kunststoff bestehen. Vorzugsweise sind beide Bauteile aus Kunststoff hergestellt, was besonders bevorzugt durch ein Spritzgussverfahren erreicht wird. Die beiden Bauteile weisen im zusammengefügten Zustand eine gemeinsame Längsachse auf, in deren Richtung auch die Elemente von außen angeordnet werden.

Beim erfindungsgemäßen Kupplungselement sind das erste Bauteil und das zweite Bauteil in Richtung der gemeinsamen Längsrichtung translatorisch zueinander verschiebbar, wobei das erste Bauteil und das zweite Bauteil um die gemeinsame Längsrichtung rotatorisch zueinander verdrehbar sind.

Durch diese Eigenschaften des erfindungsgemäßen Kupplungselements verbindet dieses die Elemente wie z.B. Leitungen etc. flexibel miteinander in dem Sinne, dass durch das Kupplungselement ein gewisser Längen- und Winkelausgleich in den Leitungsverlauf eingebracht wird. Hierdurch können Leitungen mit größeren Fertigungstoleranzen verwendet werden, weil diese in einem gewissen Maße durch die Flexibilität des erfindungsgemäßen Kupplungselements wieder ausgeglichen werden können. Dabei ist unter Flexibilität im Sinne der vorliegenden Erfindung die zuvor beschriebene Eigenschaft des Toleranzausgleichs zu verstehen, d.h. durch die Aufweitung der Toleranzmaße mehr Leitungen einsetzen zu können als bei einer starren Kupplung. Dabei kann die Verbindung zwischen den beiden Bauteilen je nach Anwendungsfall so ausgestaltet sein, dass entweder ein Freiheitsgrad oder mehrere Freiheitsgrade ermöglicht werden. Auch kann diese Verbindung unterschiedliche Maße an Freiheiten aufweisen.

Das erste Bauteil und das zweite Bauteil weisen einen zusammenwirkenden Verbindungsmechanismus auf, der eine translatorische und rotatorische Relativbewegung in einem vorbestimmten Maß zwischen dem ersten Bauteil und dem zweiten Bauteil zulässt. Auf diese Weise wird eine sichere, dauerhaft, spielfreie und mediendichte Verbindung der beiden Bauteile zu den jeweiligen Elementen zur Medienführung ermöglicht bzw. sichergestellt, da die flexible Verbindung innerhalb des Kupplungselements zwischen dessen beiden Bauteilen stattfindet.

Erfindungsgemäß weist das erste Bauteil wenigstens eine sich in Längsrichtung erstreckende Rastaufnahme und das zweite Bauteil wenigstens eine Rastklammer auf, die ausgebildet ist, in die Rastaufnahme einzugreifen. Durch diese zusammenwirkenden Elemente kann eine sichere und einfache Verbindung innerhalb des Kupplungselements hergestellt werden, die dennoch die erfindungsgemäße Flexibilität aufweisen kann.

Erfindungsgemäß weist die Rastaufnahme eine Rastkante und einen Rastanschlag auf, die in Längsrichtung zueinander beabstandet angeordnet sind, so dass sich zwischen der Rastklammer und der Rastkante bzw. dem Rastanschlag in Längsrichtung ein Abstand ausbildet, um den das erste Bauteil und das zweite Bauteil translatorisch zueinander verschiebbar sind. Durch diesen Abstand der Rastkante und des Rastanschlags in Längsrichtung zueinander wird eine Verschiebbarkeit der eingerasteten Rastklammer zwischen diesen beiden Elemente erreicht und gleichzeitig auf ein vorbestimmtest Maß eingeschränkt. Dies ermöglicht eine Relativbewegung der beiden Bauteile des Kupplungselements zueinander in diesem Maße, so dass hierdurch ein Toleranzausgleich in Längsrichtung zwischen den Elementen zur Medienführung ermöglicht wird, ohne eine rotatorische Relativbewegung auszuschließen. Gleichzeitig ist dieses Maß so gering gewählt, dass eine sichere Verbindung zwischen den Bauteilen gewährleistet wird.

Erfindungsgemäß weist die Rastklammer einen Rasthaken auf, der ausgebildet ist, hinter die Rastkante zu greifen. Hierdurch kann eine sichere Verbindung zwischen diesen Elementen hergestellt werden.

Erfindungsgemäß weist das erste Bauteil einen Vorsprung auf, welcher ausgebildet ist, in eine korrespondierende Aussparung des zweiten Bauteils einzugreifen, so dass sich zwischen dem Vorsprung und den Seiten der Aussparung in Umfangsrichtung ein Abstand ausbildet, um den das erste Bauteil und zweite Bauteil rotatorisch zueinander verdrehbar sind. Durch diesen Mechanismus wird eine rotatorische Relativbewegung zwischen den Bauteilen ermöglicht und gleichzeitig auf ein vorbestimmtest Maß eingeschränkt, so dass eine sichere Verbindung zwischen den Bauteilen gewährleistet wird.

Gemäß einem weiteren Aspekt der vorliegenden Erfindung ist die Rastklammer senkrecht zur Längsrichtung federnd ausgebildet. Dies vereinfacht die Montage, weil hierbei die Rastklammer angehoben werden kann, um danach hinter die Rastkante oder in die Vertiefung einzugreifen. Dies kann dadurch begünstigt werden, dass der vordere Bereich der Rastklammer keilförmig ausgebildet ist, um sich selbst federnd zu verbiegen, sobald er gegen ein Hindernis wie z.B. die Rastkante gedrückt wird. Auch vereinfacht die Federung der Rastklammer die Demontage auf die gleiche Art und Weise.

Gemäß einem weiteren Aspekt der vorliegenden Erfindung ist zwischen dem ersten Bauteil und dem zweiten Bauteil ein Dichtungselement vorgesehen, welches vorzugsweise ein O-Ring oder eine elastische Muffe ist. Hierdurch kann die Abdichtung zwischen den beiden Bauteilen verbessert werden. Dabei ist das Dichtungselement jeweils derart vorzusehen, dass die dichtende Wirkung zwischen den beiden Bauteilen auch bei deren erfindungsgemäßer Beweglichkeit zueinander gegeben bleibt.

Zwei Ausführungsbeispiele und weitere Vorteile der Erfindung werden nachstehend im Zusammenhang mit den folgenden Figuren erläutert. Darin zeigt:
- Fig. 1: eine perspektivische Darstellung im oberen Bereich und eine Schnittdarstellung im unteren Bereich eines auseinandergenommenen Kupplungselements gemäß einem ersten Ausführungsbeispiel der vorliegenden Erfindung;
- Fig. 2: eine perspektivische Darstellung im oberen Bereich und eine Schnittdarstellung im unteren Bereich eines zusammengesetzten Kupplungselements gemäß dem ersten Ausführungsbeispiel der vorliegenden Erfindung;
- Fig. 3: eine perspektivische Darstellung im oberen Bereich und eine Schnittdarstellung im unteren Bereich eines auseinandergenommenen Kupplungselements gemäß einem zweiten Ausführungsbeispiel der vorliegenden Erfindung;
- Fig. 4: eine perspektivische Darstellung im oberen Bereich und eine Schnittdarstellung im unteren Bereich eines zusammengesetzten Kupplungselements gemäß dem zweiten Ausführungsbeispiel der vorliegenden Erfindung.

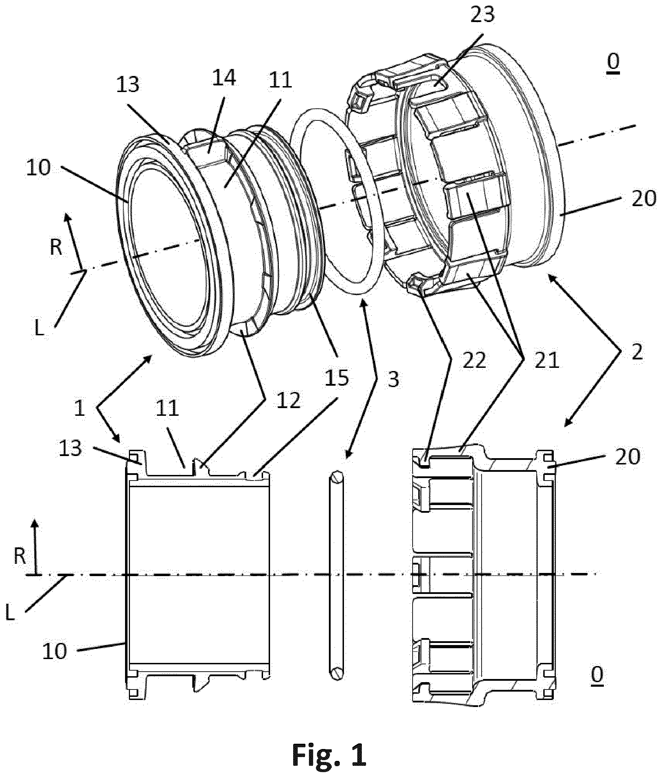

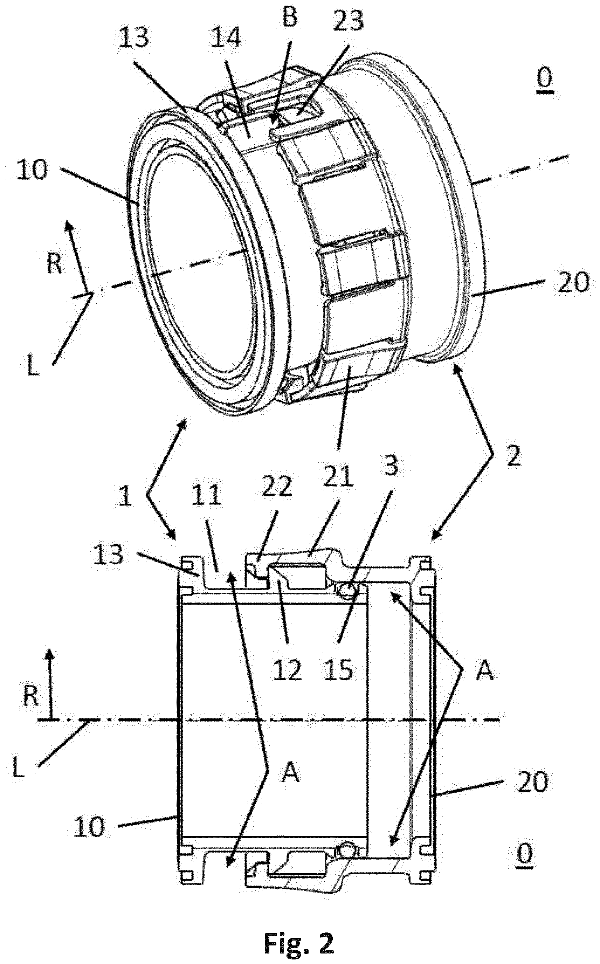

Fig. 1 zeigt eine perspektivische Darstellung im oberen Bereich und eine Schnittdarstellung im unteren Bereich eines auseinandergenommenen Kupplungselements 0 gemäß einem ersten Ausführungsbeispiel der vorliegenden Erfindung. Fig. 2 zeigt die entsprechenden Darstellungen im zusammengesetzten Zustand.

Das Kupplungselement 0 weist ein erstes Bauteil 1 und ein zweites Bauteil 2 auf, die jeweils mit einem Element zur Medienführung wie z.B. einem Schlauch oder einem Aggregat verbunden werden können (nicht dargestellt). Die beiden Bauteile 1, 2 weisen eine gemeinsame Längsachse A auf. Die beiden Bauteile 1, 2 sind in den folgenden Ausführungsbeispielen zylindrisch ausgebildet, können allerdings auch andere Geometrien und Konturen besitzen. In den dargestellten Fällen einer zylindrischen Kontur weisen die Bauteile 1, 2 eine radiale Richtung R senkrecht zur gemeinsamen Längsachse L auf. Zur radialen Richtung R senkrecht erstreckt sich die Umfangsrichtung kreisförmig um die Längsachse L herum.

Das erste Bauteil 1 weist einen Bauteilkörper 10 auf, der aus Kunststoff besteht. In der äußeren Kontur des Bauteilkörpers 10 ist eine Rastaufnahme 11 ausgebildet, die sich in Umfangsrichtung erstreckt. Die Rastaufnahme 11 wird in Richtung des zweiten Bauteils 2 durch eine Rastkante 12 und in entgegengesetzter Richtung durch einen Rastanschlag 13 begrenzt, die in diesem ersten Ausführungsbeispiel jeweils gegenüber der übrigen Oberfläche des Bauteilkörpers 10 in radialer Richtung R erhoben ausgebildet sind.

Das erste Bauteil 1 weist ferner einen Vorsprung 14 oder auch eine Rippe 14 auf, der sich radial von der Oberfläche des Bauteilkörpers 1 abhebt und in diesem ersten Ausführungsbeispiel in der Rastaufnahme 11 angeordnet ist. Der Vorsprung 14 ragt dabei radial über die Höhe der Rastaufnahme 11 hinaus.

Das erste Bauteil 1 weist auch eine Dichtungsaufnahme 15 zur Aufnahme eines Dichtungselements 3, welches in diesem ersten Ausführungsbeispiel ein O-Ring 3 ist, auf.

Das zweite Bauteil 2 weist einen Bauteilkörper 2 auf, der eine Mehrzahl von, genauer gesagt acht, in Umfangsrichtung gleichmäßig verteilt angeordneten und radial federnd ausgebildeten Rastklammern 21 besitzt, die an ihren dem ersten Bauteil 1 abgewandten Ende mit dem Bauteilkörper 2 verbunden sind. Die Rastklammern 21 weisen jeweils an ihrem dem ersten Bauteil 1 zugewandten Ende Rasthaken 22 auf, der auch als Rastnase 22 bezeichnet werden kann. Ferner ist dieses vordere Ende der Rastklammern 21 nach innen schräg, d.h. keilförmig, ausgebildet.

Das zweite Bauteil 2 weist ferner eine Aussparung 23 auf, die auch als Öffnung 23 bezeichnet werden kann. Diese ist in Richtung des ersten Bauteils 1 offen ausgebildet.

Werden die beiden Bauteile 1, 2 zusammengefügt, so wird zunächst der O-Ring 3 in die entsprechende Dichtungsaufnahme 15 eingelegt. Dann wird das zweite Bauteil 2 in Richtung der gemeinsamen Längsachse L auf das erste Bauteil 1 aufgeschoben. Hierbei kommen im Laufe der Bewegung die vorderen Enden der Rastklammern 21 mit der Rastkante 12 in Kontakt. Aufgrund ihrer keilförmigen Ausgestaltung werden die Rastklammern 21 beim Fortsetzen der Bewegung federnd durch die Rastkante 12 angehoben, bis sie mit ihren Rasthaken 22 hinter die Rastkante 12 in die Rastaufnahme 11 greifen und so eine Bewegung entgegen der Richtung des Zusammensetzens der Bauteile 1, 2 verhindern.

Erfindungsgemäß ist dabei die Rastaufnahme 11 jedoch in Richtung der Längsachse L deutlich länger ausgebildet als die Rasthaken 22 der Rastklammern 21, so dass das zweite Bauteil 2 im verrasteten Zustand weiter in Richtung der Längsachse L um einen Abstand A bewegt werden kann, bis seine Bewegung durch den Rastanschlag 13 begrenzt wird. In entgegengesetzter Richtung kann das zweite Bauteil 2 wieder um den Abstand A zurückbewegt werden, bis die Rasthaken 22 der Rastklammern 21 an die Rastkante 12 stoßen. Der Abstand A, um den die beiden Bauteile 1, 2 in Längsrichtung L, d.h. translatorisch, gegeneinander verschoben werden können, entspricht somit dem Abstand zwischen Rasthaken 22 und Rastanschlag 13 bzw. zwischen Rasthaken 22 und Rastkante 12. Gleichzeitig können die beiden Bauteile 1, 2 an sich in Umfangsrichtung, d.h. rotatorisch, gegeneinander verdreht werden.

Diese rotatorische Beweglichkeit wird durch das Zusammenwirken von Vorsprung 14 und Aussparung 23 auf ein vorbestimmtes Maß eingeschränkt; auf diese Möglichkeit kann jedoch je nach Anwendungsfall auch verzichtet werden. In diesem ersten Ausführungsbeispiel jedoch umgreift die Aussparung 23 den Vorsprung 14 im zusammengesetzten Zustand seitlich, so dass sich jeweils in Umfangsrichtung U Abstände B ausbilden, um die die beiden Bauteile 1, 2 zueinander verdreht werden können. Der maximal mögliche Verdrehwinkel ist der Abstand B, wenn eine Seite des Vorsprungs 14 die korrespondierende Seite der Aussparung 23 berührt.

Dabei ist gleichzeitig die Dichtungsaufnahme 15 so angeordnet, dass der O-Ring 3 über den gesamten Abstand A hinweg sicher mit beiden Bauteilen 1, 2 dichtend in Kontakt steht.

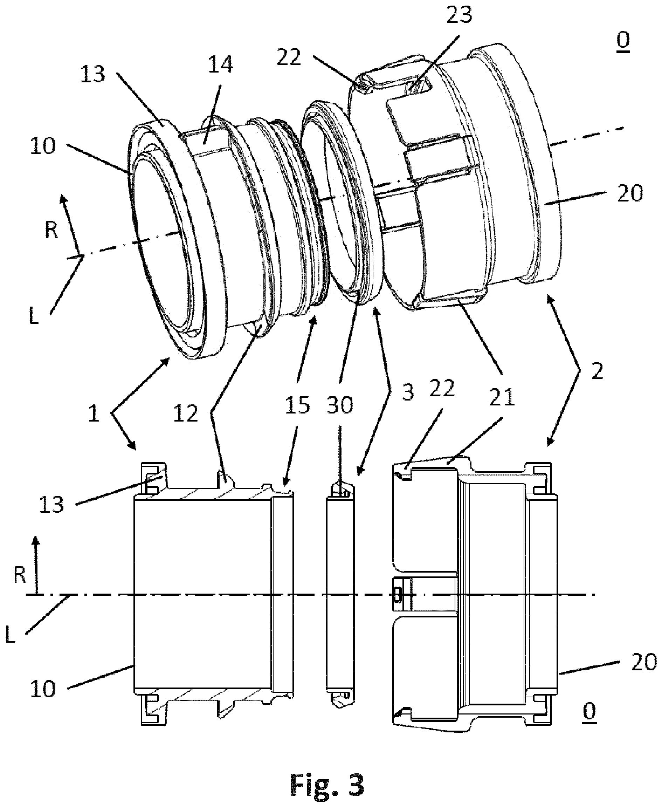

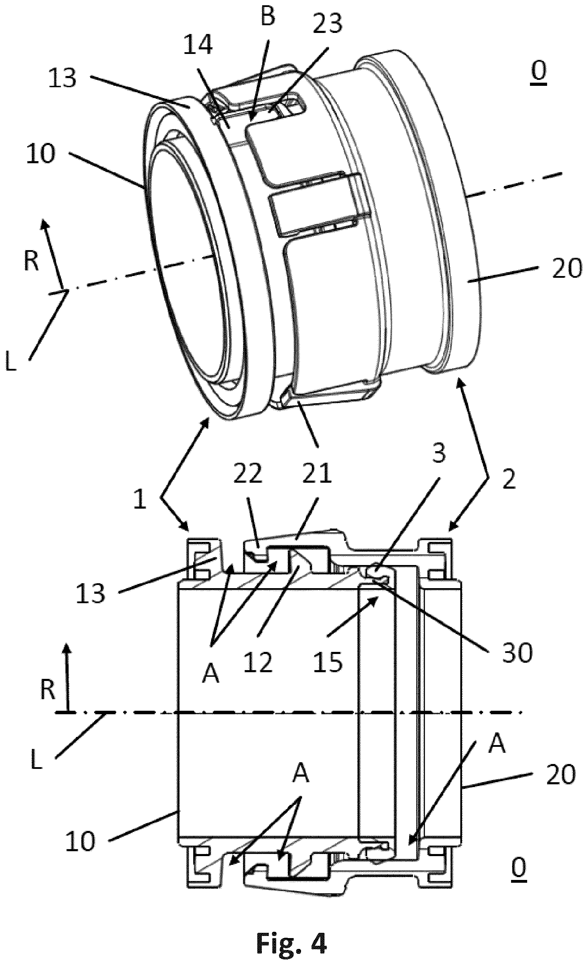

Fig. 3 zeigt eine perspektivische Darstellung im oberen Bereich und eine Schnittdarstellung im unteren Bereich eines auseinandergenommenen Kupplungselements 0 gemäß einem zweiten Ausführungsbeispiel der vorliegenden Erfindung. Fig. 4 zeigt die entsprechenden Darstellungen im zusammengesetzten Zustand.

Das zweite Ausführungsbeispiel unterscheidet sich lediglich dadurch vom ersten Ausführungsbeispiel, dass hier lediglich vier Rastklammern 21 verwendet werden und dass anstelle eines O-Rings 3 eine elastische Muffe 3 als Dichtungselement 3 verwendet wird. Die elastische Muffe 3 weist eine Verrastungsaufnahme 30 auf, mit der sie auf eine korrespondierende hakenförmig ausgebildete Dichtungsverrastung 15 des ersten Bauteils aufgesetzt und verrastet werden kann.

### Bezugszeichenliste

### (Teil der Beschreibung)

- A: Abstand in Längsrichtung L
- B: Abstand in Umfangsrichtung
- L: Längsachse
- R: radiale Richtung
- 0: Kupplungselement
- 1: erstes Bauteil des Kupplungselements 0
- 10: Bauteilkörper
- 11: Rastaufnahme
- 12: Rastkante, Rastpunkt
- 13: Rastanschlag
- 14: Vorsprung
- 15: Dichtungsaufnahme, Dichtungsverrastung

- 2: zweites Bauteil des Kupplungselements 0
- 20: Bauteilkörper
- 21: (federnde) Rastklammer
- 22: Rasthaken, Rastnase, Rastöffnung
- 23: Aussparung, Öffnung

- 26: Dichtungsaufnahme
- 3: Dichtungselement, O-Ring, elastische Muffe
- 30: Verrastungsaufnahme

## Patentansprüche

1. Kupplungselement (0) zur flexiblen Verbindung zweier Elemente zur Führung von Medien, insbesondere eines Schlauches mit einem anderen Schlauch oder einem Aggregat, mit
einem ersten Bauteil (1) zur Verbindung mit dem ersten Element, und
einem zweiten Bauteil (2) zur Verbindung mit dem zweiten Element,
wobei das erste Bauteil (1) und das zweite Bauteil (2) eine gemeinsame Längsrichtung (L) besitzen, wobei das erste Bauteil (1) und das zweite Bauteil (2) in Richtung der gemeinsamen Längsrichtung (L) translatorisch zueinander verschiebbar sind, und wobei das erste Bauteil (1) und das zweite Bauteil (2) um die gemeinsame Längsrichtung (L) rotatorisch zueinander verdrehbar sind,
wobei das erste Bauteil (1) wenigstens eine sich in Längsrichtung (L) erstreckende Rastaufnahme (11) aufweist, und
wobei das zweite Bauteil (2) wenigstens eine Rastklammer (21) aufweist, die ausgebildet ist, in die Rastaufnahme (11) einzugreifen,
wobei die Rastaufnahme (11) eine Rastkante (12) und einen Rastanschlag (13) aufweist, die in Längsrichtung (L) zueinander beabstandet angeordnet sind, so dass sich zwischen der Rastklammer (21) und der Rastkante (12) bzw. dem Rastanschlag (13) in Längsrichtung (L) ein Abstand (A) ausbildet, um den das erste Bauteil (1) und das zweite Bauteil (2) translatorisch zueinander verschiebbar sind, wobei die Rastklammer (21) einen Rasthaken (22) aufweist, der ausgebildet ist, hinter die Rastkante (12) zu greifen, **dadurch gekennzeichnet, dass** das erste Bauteil (1) einen Vorsprung (14) aufweist, welcher ausgebildet ist, in eine korrespondierende Aussparung (23) des zweiten Bauteils (2) einzugreifen, so dass sich zwischen dem Vorsprung (14) und den Seiten der Aussparung (23) in Umfangsrichtung ein Abstand (B) ausbildet, um den das erste Bauteil (1) und zweite Bauteil (2) rotatorisch zueinander verdrehbar sind.

2. Kupplungselement (0) nach Anspruch 1,
wobei die Rastklammer (21) senkrecht zur Längsrichtung (L) federnd ausgebildet ist.

3. Kupplungselement (0) nach einem der vorherigen Ansprüche,
wobei zwischen dem ersten Bauteil (1) und dem zweiten Bauteil (2) ein Dichtungselement (3) vorgesehen ist, welches vorzugsweise ein O-Ring (3) oder eine elastische Muffe (3) ist.

## Claims

1. Coupling element (0) for the flexible connection of two elements for conducting media, in particular of one flexible hose to another flexible hose or to a unit, having a first component (1) for connection to the first element, and a second component (2) for connection to the second element, wherein the first component (1) and the second component (2) have a common longitudinal direction (L), wherein the first component (1) and the second component (2) can be displaced translationally with respect to one another in the direction of the common longitudinal direction (L), and wherein the first component (1) and the second component (2) can be rotated with respect to one another about the common longitudinal direction (L), wherein the first component (1) has at least one latching receptacle (11) which extends in the longitudinal direction (L), and wherein the second component (2) has at least one latching clip (21) which is designed to engage in the latching receptacle (11), wherein the latching receptacle (11) has a latching edge (12) and a latching stop (13) which are arranged spaced apart from one another in the longitudinal direction (L), with the result that a spacing (A) is formed between the latching clip (21) and the latching edge (12) or the latching stop (13) in the longitudinal direction (L), by which spacing the first component (1) and the second component (2) can be displaced translationally with respect to one another, wherein the latching clip (21) has a latching hook (22) which is designed to engage behind the latching edge (12), **characterized in that** the first component (1) has a projection (14) which is designed to engage in a corresponding recess (23) of the second component (2), with the result that a spacing (B) is formed between the projection (14) and the sides of the recess (23) in the circumferential direction, by which spacing the first component (1) and second component (2) can be rotated with respect to one another.

2. Coupling element (0) according to Claim 1, wherein the latching clip (21) is designed to be resilient perpendicularly to the longitudinal direction (L).

3. Coupling element (0) according to one of the preceding claims, wherein a sealing element (3), which is preferably an O-ring (3) or an elastic sleeve (3), is provided between the first component (1) and the second component (2).

## Revendications

1. Élément d'accouplement (0), destiné à assurer le raccord souple de deux éléments destinés à la conduction de fluides, notamment d'un flexible avec un autre flexible ou avec un agrégat, pourvu d'un premier composant (1), destiné à être raccordé premier élément et d'un deuxième composant (2), destiné à être raccordé au deuxième élément, le premier composant (1) et le deuxième composant (2) présentant une direction longitudinale (L) commune, le premier composant (1) et le deuxième composant (2) étant déplaçables en translation l'un par rapport à l'autre, dans le sens de la direction longitudinale (L) commune et le premier composant (1) et le deuxième composant (2) étant aptes à être tournés en rotation l'un par rapport à l'autre autour de la direction longitudinale (L) commune, le premier composant (1) comportant au moins un logement d'encliquetage (11) s'étendant dans la direction longitudinale (L) et le deuxième composant (2) comportant au moins un crampon d'encliquetage (21) qui est conçu pour s'engager dans le logement d'encliquetage (11), le logement d'encliquetage (11) comportant une arête d'encliquetage (12) et une butée d'encliquetage (13), qui sont placées en étant écartées l'une de l'autre dans la direction longitudinale (L), de telle sorte qu'entre le crampon d'encliquetage (21) et l'arête d'encliquetage (12), respectivement la butée d'encliquetage (13), il se crée un écart (A) dans la direction longitudinale (L), de la valeur duquel, le premier composant (1) et le deuxième composant (2) sont déplaçables en translation l'un par rapport à l'autre, le crampon d'encliquetage (21) comportant un crochet d'encliquetage (22) qui est conçu pour s'accrocher derrière l'arête d'encliquetage (12), **caractérisé en ce que** le premier composant (1) comporte une saillie (14), laquelle est conçue pour s'engager dans un évidement (23) correspondant du deuxième composant (2), de sorte qu'il se crée entre la saillie (14) et les côtés de l'évidement (23) un écart (B) dans la direction périphérique, de la valeur duquel le premier composant (1) et le deuxième composant (2) sont aptes à tourner en rotation l'un par rapport à l'autre.

2. Élément d'accouplement (0) selon la revendication 1, le crampon d'encliquetage (21) étant conçu en étant résilient à la perpendiculaire de la direction longitudinale (L).

3. Élément d'accouplement (0) selon l'une quelconque des revendications précédentes, entre le premier composant (1) et le deuxième composant (2) étant prévu un élément d'étanchéité (3), lequel est de préférence un joint torique (3) ou un manchon (3) élastique.
